# EUROPEAN PATENT SPECIFICATION

(11) **EP 0 724 475 B1**
(45) Date of publication and mention of the grant of the patent: **16.07.1997**
(21) Application number: 94926442.8
(22) Date of filing: 05.09.1994
(51) Int. Cl.: B01D 53/50, B01D 53/60, B01D 53/81

(54) **FLUE GAS PURIFICATION**
ABGASREINIGUNG
PURIFICATION DES GAZ DE FUMEE

(30) Priority: 03.09.1993 SE 9302847
(43) Date of publication of application: 07.08.1996
(73) Proprietor: Lidström, Lars Jörgen, S-134 00 Gustavsberg (SE)
(72) Inventor: Lidström, Lars Jörgen, S-134 00 Gustavsberg (SE)
(74) Representative: Nilsson, Karl Ingvar
(86) International application number: SE9400819
(87) International publication number: WO9506512

(56) References cited:
- WO-A-87/06853
- DE-C- 4 104 180
- SE-B- 456 642

## Description

The present invention relates to a method of reducing sulphur emissions from a furnace plant, for instance when burning sulphur-containing fuel in a combustion plant, wherein the method includes injecting lime-rich powder into generated hot flue gases in accordance with the preamble of Claim 1.

When burning sulphur-containing fuels, it is known to add lime-rich powder to the combustion zone and/or to generated hot flue gases, in the space above said zone, with the intention of cleansing the gases of their sulphur content. The powder is calcined in the process and binds sulphur as sulphate. The average grain size of lime-rich powder that has been ready-ground in ball mills is often too large and its size distribution too flat to be optimal from the aspect of sulphur absorption, since grinding of the limestone or dolomite stone to finer grain sizes would require a much higher input of energy and therewith result in low energy and capacity usage. Furthermore, the grains or particles obtained when practicing conventional grinding methods also have relatively small reactivity, which in combination with the relatively coarse powder particles increases the amount of powder required to achieve satisfactory desulphurization of the gases and also lengthens the time over which it is necessary for the powder and gases to be in contact with one another. Long contact times are also liable to cause the surface regions of the lime or dolomite particles calcined in the flue gases to begin to sinter, therewith inhibiting the reaction between sulphur dioxide in the flue gases and the material present in the interior of the powder particles.

It has also been proposed, as illustrated in SE-B-456 642, to finely-divide a lime-rich powder intended for furnace gas purification purposes in a fluidized bed, by delivering the powder to the furnace through the medium of the fluidized bed, together with the bed-fluidizing gas. Although the material will be ground down or attrited to some extent in the fluidized bed, the extent to which the material is finely-divided is greatly restricted by the fact that the amount of fluidizing gas must be adapted precisely to that required to transport the correct amount of powder to the furnace.

The object of the present invention is to provide a novel and improved flue gas purification method which will enable lime-rich powder charged to the system to be utilized practically optimally in a simple and economic fashion.

To this end, it is proposed that when practicing the method defined in the introduction the lime-rich material is finely ground in a mill working with an agitated grinding medium.

The powder particles that are obtained by finely grinding the material in this way are particularly reactive.

The fine-grinding process is conveniently carried out in a dry environment and the material is preferably ground to a particle size within the range of k₅₀ = 5 µm to k₅₀ = 2 µm. The material will also preferably be finely ground to a particle or grain size of 100% by weight beneath 15-30 µm.

A mill working with agitated grinding medium includes a stationary cylindrical grinding chamber having generally an essentially vertical axis and a diameter which will normally be smaller than the axial length of the chamber. The grinding chamber contains a filling of grinding bodies which are set into motion by means of a rotor located in the centre of the mill. The rotor includes a plurality of generally radial rods which transfer energy to the product to be ground through the medium of the grinding bodies. With regard to the particle sizes desired in the case of the present invention, optimal conditions and optimal energy utilization are achieved when finely grinding material with the aid of comparatively small grinding bodies, suitably bodies having an average size within the range of 2-10 mm. Bodies of such smallness, however, can only function effectively when vigorously agitated and the use of a rotor of the aforedescribed kind is therefore required . The use of small grinding bodies with the exclusion of the rotor and with the mill rotated in a horizontal position will only provide a low grinding effect and does not constitute a practical alternative to a rotor-equipped mill. When practicing the inventive method, the size of the grinding bodies is chosen within the aforesaid ranges in accordance with the extent to which the material shall be ground and also in accordance with the particle size of the input material. The relatively small grinding bodies provide an effective grinding effect essentially on the coarser part of the input material at a relatively low energy input, such as to obtain a particle size and a steep grain-size distribution that are generally optimal with regard to the desulphurization of flue gases.

In the case of agitated mills, the energy input per unit volume of grinding space is very high in comparison with rotary mills, meaning that the mill installation requires relatively small space. The mills can be constructed for grinding on a small scale to no disadvantage, i.e. can be arranged adjacent a firing plant for supply with solely newly ground and therewith reactive lime-rich powder of optimally adjusted grain-size distribution.

When dry grinding, the material flows freely through the mill under its own power. This method of controlling the flow of material through the mill contributes to the effective grinding of the material, by virtue of the material being necessitated to pass through a bed of relatively fine grinding bodies, which statistically means that coarse particles will be subjected to a greater grinding effect than finer particles. As a result of the wear on the grinding bodies, the grinding body charge becomes graduated, meaning that the unworn grinding bodies, i.e. the largest grinding bodies, will be located in the upper part of the mill, whereas the worn grinding bodies, i.e. the smallest grinding bodies, will be located in the lower part of the mill. This is an advantage with regard to the grinding effect obtained, since the incoming material will first meet the coarser grinding bodies and, as the material is ground down, will flow through the mill and meet progressively smaller grinding bodies, therewith promoting effective grinding of the material. This grinding principle can also be characterized as incorporating a dynamic classification function which cooperates in making grinding so effective as to often render any form of external classification unnecessary for the purpose intended.

Tests have shown clearly that it is not only the physical processes associated with mechanical degradation of the material that occur in the fine-grinding process, and that the structure, surface properties and reaction tendencies of the material are also changed, and in some instances chemical reactions also take place. The aforesaid changes increase with the increasing extent to which the material is finely ground, while dry grinding produces more radical changes than wet grinding. It should be mentioned, however, that in the event of long or protracted periods between the time of grinding the material and its use the effects obtained with more extreme dry fine-grinding of the material tend to deteriorate as a result of reaction with atmospheric moisture among other things.

The large quantities of energy delivered to carbonate material in an effective fine-grinding process of the kind concerned will also result in a lattice-disturbed layer which will have a microcrack density such as to greatly increase reactivity above that which can be explained by the size of the individual grains or particles, in addition to producing fresh surface formations and newly formed particles. These results can be observed by any one of a number of different assaying or investigative methods, such as differential thermal analysis, X-ray analysis or nuclear magnetic resonance.

When using the finely ground carbonate minerals to reduce the sulphur content of flue gases by absorption in the upper part of a furnace, the carbonates calcine, i.e. the carbon dioxide content is driven-off, and the remaining oxide reacts with the sulphur dioxide of the flue gas to form sulphate. This calcining process should not take place at an excessively high temperature so that the resultant oxide will become porous and not through-sintered, since a through-sintered oxide will reduce the sulphatization possibilities.

The rate of calcination is greatly affected by particle size. At a temperature of about 1,000°C, 100 µm particles will be calcined in the matter of 1 second, whereas 10 µm particles will be calcined in about 0.1 second, and the calcination time of particles of 1 µm will be about 0.01 second at this temperature. The lattice disturbances generated by the fine-grinding process concerned here also contribute to the increase in reactivity, and it is therefore beneficial to use the finely-ground powder in direct connection with its manufacture. The shorter reaction times achieved with smaller particle sizes may also be used to allow the calcination reaction to take place at lower temperatures. For instance, it is judged that 1 µm particle can be calcined in about 1 second when the temperature is lowered to about 800°C.

When carrying out comparison tests in which limestone fractions of 1-100 µm and 1-10 µm were injected into the system, it was found that three times as much sulphur dioxide,SO₂, was removed with the latter fraction at the same carbonate charge.

When practicing the present invention, the fine-grinding of material in the mill working with agitated grinding medium can be adapted with regard to throughput and/or particle size in a manner to achieve essentially optimal desulphurization of the furnace-generated flue gases. The fine-grinding material is suitably lime-rich material that has been earlier ground by conventional grinding processes, particularly in a ball mill. The lime-rich material used is preferably limestone and/or dolomite.

The finer the particles the more complete the sulphatization process, since the reaction of the larger particles is delayed and retarded by virtue of the resultant reaction products, the sulphates, blocking the pores of the particle surfaces and preventing the sulphur-containing flue gas penetrating the pores. Because the invention enables the production of fine-grain carbonate fractions which are directly adapted to the conditions that prevail in each individual object, it is possible in principle to adapt the particle size to those furnace temperatures which behave in a fashion most optimal from a cleansing or purifying aspect.

It may be suitable, for some reason or another, to carry out the fine-grinding process in at least two stages, by regrinding powder that has been ground in an earlier grinding stage in at least one later grinding stage in the same mill. A NOₓ₋reducing additive, such urea, may also be added to the desulphurized lime-rich material in conjunction with the fine-grinding process, this additive material then being ground together with the lime-rich material.

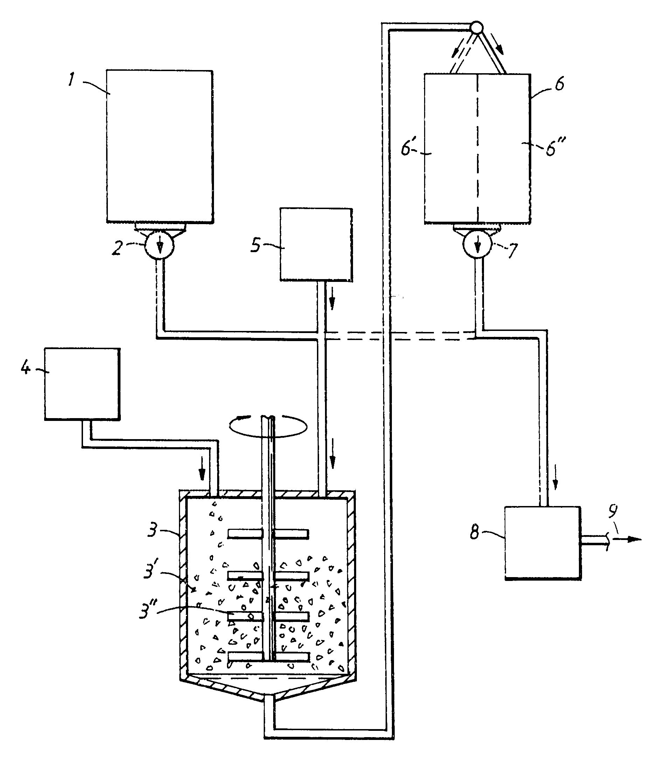

The invention will now be described in more detail with reference to the accompanying drawing, which illustrates very schematically an exemplifying embodiment of plant for carrying out the inventive method.

The drawing shows a hopper 1 which contains pre-ground lime-rich and sulphur-binding carbonate material. The supply of carbonate to an agitating mill 3 is controlled by a feed means 2, which is preferably in the form of a screw feeder. The speed of the mill 3 can be regulated, so as to achieve further optimization of the grinding parameters. Grinding bodies are supplied through a hopper 4. The grinding bodies may have different sizes and may consist of different materials and/or have different geometrical shapes, all depending on the desired degree of fineness of the end product. This choice is based on an economic assessment, in which the cost of the grinding bodies is set against the degree of grinding efficiency. In order to achieve a desired degree of fineness of the ground product while, at the same time, obtaining a somewhat improved grinding efficiency, it is feasible to introduce auxiliary grinding agents in the form of dispersants with the aid of devices referenced 5 in the drawing.

The carbonate fraction is thus introduced into the mill 3 with an agitated grinding medium. By this is meant in the present application a mill in which the grinding effect is achieved by agitating grinding bodies 3*'* and the carbonate fraction being ground in the mill by means of an agitator 3'' rotating at a high speed. The grinding action is achieved through the pressure and shear forces acting between grinding bodies and carbonate mineral, these forces being generated by the aforesaid agitator which normally rotates at a speed of 80 r.p.m. and delivers a high power per unit of mill voume, normally in the order of at least ten times the power consumption of a conventional ball mill per unit of mill volume.

The mill 3 works with relatively small grinding bodies, e.g. bodies having an average size of 2-10 mm, and with a moderate residence time of the supplied carbonate material the mill will grind the material down to a grain size smaller than k₅₀ = 10 µm, such as a grain size within the range of k₅₀ = 5 µm to k₅₀ = 2µm and with 100 percent by weight beneath 15-30µm.

Grinding is combined in a suitable way with a hopper containing ground material 6. By providing the hopper with two compartments 6' and 6'' in some appropriate manner, the ground material can be reground one or more times before being delivered by a discharge means 7 to an injection feed device 8 in which the end product 9 is blown into a suitable part of a furnace space (not shown).

The number of regrinding processes for obtaining the desired particle size distribution of the end product can be controlled by the batch-wise supply of the output fraction through the feeder 2 and the already ground fraction through the feeder 7 over a given period of time. The hoppers and the mill power are dimensioned and adapted with regard hereto.

When grinding the material to an end product which is not too fine, it is not always necessary to employ a multi-stage grinding process via the hopper 6', as indicated in broken lines, since it will suffice to deliver the ground product directly to the injection device 8 through the hopper compartment 6''.

Experience with agitated mills have shown that for the purpose of obtaining a given fine-fraction, it may be advantageous from an energy and operation aspect to carry out the grinding process in several stages instead of in one single stage. This enables savings in energy in the order of tens of percent to be made while also reducing agglomerating tendencies. The mill units may be made small for small production capacities to no detriment, whereby mobile or semi-mobile plants are also conceivable.

Fine-grinding of the lime-rich material may be effected in more than one stage in series-connected mills using agitated grinding media, and the lime-rich material ground in the mill may be in a calcined or slaked state.

## Claims

1. A method of reducing sulphur emissions from a furnace plant in which powder produced by finely-dividing lime-rich material to a particle size beneath k₅₀ = 10 µm is injected into hot flue gases generated in the furnace, wherein the lime-rich material is finely-divided in a preferably dry environment and at least essentially in immediate connection with the use of the powder, **characterized** by finely-dividing the material in a grinding mill of the kind having a stationary upright cylindrical grinding chamber in which a centrally located rotor, provided with a plurality of generally radial rods, transfers grinding energy to the material to be ground via a filling of grinding bodies having an average size within the range of 2-15 mm.

2. A method according to Claim 1, **characterized** by finely-grinding the material with the aid of grinding bodies having an average size within the range 2-10 mm.

3. A method according to Claim 1 or 2, **characterized** by finely-grinding the material to a particle size within the range of k₅₀ = 5 µm to k₅₀ = 2 µm.

4. A method according to any one of Claims 1-3, **characterized** by finely-grinding the material to a particle size of 100 percent by weight beneath 15-30 µm.

5. A method according to any one of Claims 1-4, **characterized** by finely-grinding the material in at least two stages, by regrinding powder that has been ground in an earlier stage in at least one later stage in the same mill.

6. A method according to any one of Claims 1-5, **characterized** by adapting the fine-grinding process in the mill working with agitated grinding medium with regard to throughput and/or particle size so as to achieve an essentially optimal desulphurizing effect.

7. A method according to any one of Claims 1-6, **characterized** by fine-grinding lime-rich material that has earlier been ground by a conventional grinding method, preferably in a ball mill.

8. A method according to any one of Claims 1-7, **characterized** by using limestone and/or dolomite as the lime-rich material.

9. A method according to any one of Claims 1-8, **characterized** by mixing a NOₓ-reducing material, for instance urea, with the lime-rich material prior to or after finely-grinding said material.

## Patentansprüche

1. Verfahren zur Reduzierung von Schwefelemissionen aus einer Ofenanlage, bei welchem Pulver, welches durch Feinzerteilung von kalkreichem Material auf eine Teilchengröße unter k₅₀ = 10 µm hergestellt wurde, in heiße Abgase injiziert wird, welche in dem Ofen erzeugt werden, wobei das kalkreiche Material in einer vorzugsweise trockenen Umgebung und mindestens im wesentlichen in sofortiger Verbindung mit der Verwendung des Pulvers fein verteilt wird, **gekennzeichnet** durch Feinzerteilen des Materials in einer Feinmahlanlage der Art, welche eine feststehende aufrechte zylindrische Mahlkammer hat, in welcher ein zentral angeordneter Rotor, welcher mit einer Vielzahl von im allgemeinen radialen Stäben versehen ist, Mahlenergie auf das zu mahlende Material über eine Füllung von Mahlkörpern überträgt, welche eine durchschnittliche Größe im Bereich von 2-15 mm haben.

2. Verfahren nach Anspruch 1, gekennzeichnet durch Feinzerteilen des Materials mit der Hilfe von Mahlkörpern, welche eine durchschnittliche Größe im Bereich von 2-10 mm haben.

3. Verfahren nach Anspruch 1 oder 2, gekennzeichnet durch Feinmahlen des Materials auf eine Teilchengröße im Bereich von k₅₀ = 5 µm bis k₅₀ = 2 µm.

4. Verfahren nach einem der Ansprüche 1 bis 3, gekennzeichnet durch Feinmahlen des Materials auf eine Teilchengröße von 100 Gewichtsprozent unter 15-30 µm.

5. Verfahren nach einem der Ansprüche 1 bis 4, gekennzeichnet durch Feinmahlen des Materials in mindestens zwei Stufen, durch Wiedermahlen des Pulvers, welches in einer früheren Stufe gemahlen wurde, in mindestens einer späteren Stufe in der gleichen Mühle.

6. Verfahren nach einem der Ansprüche 1 bis 5, gekennzeichnet durch Anpassen des Feinmahlprozesses in der Mühle, welche mit einem bewegten Mahlmedium arbeitet, mit Bezug auf Durchsatz und/oder Teilchengröße, um so eine im wesentlichen optimale Entschwefelungswirkung zu erzielen.

7. Verfahren nach einem der Ansprüche 1 bis 6, gekennzeichnet durch Feinmahlen kalkreichen Materials, welches früher durch ein herkömmliches Mahlverfahren gemahlen wurde, vorzugsweise in einer Kugelmühle.

8. Verfahren nach einem der Ansprüche 1 bis 7, gekennzeichnet durch die Verwendung von Kalkstein und/oder Dolomit als das kalkreiche Material.

9. Verfahren nach einem der Ansprüche 1 bis 8, gekennzeichnet durch Mischen eines NOₓ-reduzierenden Materials, zum Beispiel Harnstoff, mit dem kalkreichen Material vor oder nach dem Feinmahlen des Materials.

## Revendications

1. Un procédé de réduction des émissions de soufre à partir d'une installation de foyer dans laquelle de la poudre produite par division fine d'un matériau riche en chaux jusqu'à une taille de particules intérieure à k₅₀ = 10 µm est injectée dans les gaz de fumée chauds générés dans le foyer, procédé dans lequel le matériau riche en chaux est divisé finement de préférence dans un environnement sec et au moins sensiblement en liaison immédiate avec l'utilisation de la poudre, caractérisé en ce que le matériau est finement divisé dans un broyeur du type ayant une chambre de broyage cylindrique verticale fixe dans laquelle un rotor disposé centralement et muni d'une pluralité de tiges généralement radiales transmet de l'énergie de broyage au matériau à broyer par l'intermédiaire d'un remplissage de corps de broyage ayant une taille moyenne comprise entre 2 et 15 mm.

2. Un procédé selon la revendication 1, caractérisé en ce que le matériau est finement divisé au moyen de corps de broyage ayant une taille moyenne comprise entre 2 et 10 mm.

3. Un procédé selon la revendication 1 ou la revendication 2, caractérisé en ce que le matériau est finement divisé à une taille de particules comprise entre k₅₀ = 5 µm et k₅₀ = 2 µm.

4. Un procédé selon l'une quelconque des revendications 1 à 3, caractérisé en ce que le matériau est finement divisé à une taille de particules inférieure à 15-30 µm pour 100% d'entre elles en poids.

5. Un procédé selon l'une quelconque des revendications 1 à 4, caractérisé en ce que le matériau est finement divisé en au moins deux étapes, en rebroyant de la poudre qui a été broyée dans une étape préalable dans au moins une étape ultérieure dans le même broyeur.

6. Un procédé selon l'une quelconque des revendications 1 à 5, caractérisé en ce que le processus de broyage fin est adapté dans le broyeur travaillant avec un agent de broyage sous agitation en ce qui concerne le débit et/ou la taille des particules de manière à obtenir un effet de désulfuration sensiblement optimal.

7. Un procédé selon l'une quelconque des revendications 1 à 6, caractérisé en ce que l'on broie finement un matériau riche en chaux qui a été préalablement broyé par un procédé de broyage classique, de préférence dans un broyeur à boulets.

8. Un procédé selon l'une quelconque des revendications 1 à 7, caractérisé en ce que l'on utilise du calcaire et/ou de la dolomie comme matériau riche en chaux.

9. Un procédé selon l'une quelconque des revendications 1 à 8, caractérisé en ce que l'on mélange un matériau réducteur de NOₓ₋, par exemple de l'urée, avec le matériau riche en chaux, avant ou après le broyage fin dudit matériau.
